# FASCICULE DE BREVET EUROPEEN

(11) **EP 3 838 645 B1**
(45) Date de publication et mention de la délivrance du brevet: **19.02.2025**
(21) Numéro de dépôt: 20215366.4
(22) Date de dépôt: 18.12.2020
(51) Int. Cl.: B60K 11/08

(54) **DISPOSITIF DE GRILLE ACTIVE POUR VÉHICULE AUTOMOBILE**
AKTIVE GITTERVORRICHTUNG FÜR EIN KRAFTFAHRZEUG
ACTIVE GRID DEVICE FOR A MOTOR VEHICLE

(30) Priorité: 19.12.2019 FR 1914983
(43) Date de publication de la demande: 23.06.2021
(73) Titulaire: Flex-N-Gate France, 25405 Audincourt (FR)
(72) Inventeur: GUYON, Cyrille, 25600 NOMMAY (FR); CLAPIÉ, Yann, 85134 STAMMHAM (DE); THOULOUZE, Bertrand, 85080 GAIMERSHEIM (DE)
(74) Mandataire: Lavoix

(56) Documents cités:
- WO-A2-2017/021205
- DE-A1- 102008 061 054
- DE-A1- 102016 015 116
- GB-A- 240 292

## Description

La présente invention concerne un dispositif de grille active, du type comportant : un cadre ; un premier ensemble mobile, comprenant au moins un premier volet apte à pivoter par rapport au cadre entre une position fermée et une position ouverte ; un deuxième ensemble mobile, comprenant au moins un deuxième volet apte à pivoter par rapport au cadre entre une position fermée et une position ouverte ; un premier et un deuxième chemins de came ; et un premier et un deuxième mécanismes de liaison reliant les premier et deuxième ensembles mobiles, respectivement au premier et au deuxième chemins de came, chacun des premier et deuxième mécanismes de liaison comprenant au moins une biellette.

De manière connue, un tel dispositif de grille active est disposé à l'avant d'un véhicule automobile, afin de réguler une entrée d'air à l'intérieur dudit véhicule au cours de son déplacement. Une telle entrée d'air permet notamment de refroidir un compartiment moteur dudit véhicule.

Afin de moduler précisément la circulation d'air de l'extérieur vers l'intérieur du véhicule, il est connu, par exemple du document WO2017/109371, de munir le dispositif de grille active de plusieurs volets. Ces derniers peuvent indépendamment être déplacés en position ouverte ou fermée, de sorte à modifier progressivement un débit d'air vers l'intérieur du véhicule.

Le document DE102016015116 décrit également un dispositif de grille active à plusieurs groupes de volets qui peuvent indépendamment être déplacés en position ouverte ou fermée, chaque groupe de volet étant actionné par l'intermédiaire d'un chemin de came distinct.

La présente invention a pour but de proposer un dispositif simple à réaliser et permettant de moduler efficacement une circulation d'air à travers ledit dispositif.

A cet effet, l'invention a pour objet un dispositif de grille active du type précité, correspondant aux caractéristiques de la revendication 1.

Le dispositif selon l'invention permet ainsi une ouverture séquentielle des volets, associée aux besoins de refroidissement.

Suivant d'autres aspects avantageux de l'invention, le dispositif de grille active comporte l'une ou plusieurs des caractéristiques suivantes, prises isolément ou suivant toutes les combinaisons techniquement possibles et en accord avec les revendications :
- le dispositif comprend en outre un actionneur relié au levier d'actionnement, ledit actionneur étant apte à faire pivoter ledit levier par rapport au cadre entre les première, deuxième et troisième configurations ;
- le premier chemin de came comporte une portion active et une portion inactive, configurées de sorte que : le pivotement du levier d'actionnement entre la première et la deuxième configurations conduit le premier patin à coulisser dans la portion active du premier chemin de came ; et le pivotement du levier d'actionnement entre la deuxième et la troisième configurations conduit le premier patin à coulisser dans la portion inactive du premier chemin de came ;
- le dispositif est configuré de sorte que le coulissement du premier patin dans la portion active du premier chemin de came conduit à une translation de la biellette du premier mécanisme de liaison, de sorte à faire pivoter le premier volet entre les positions fermée et ouverte ;
- le deuxième chemin de came comporte une portion inactive et une portion active, configurées de sorte que : le pivotement du levier d'actionnement entre la première et la deuxième configurations conduit le deuxième patin à coulisser dans la portion inactive du deuxième chemin de came ; et le pivotement du levier d'actionnement entre la deuxième et la troisième configurations conduit le deuxième patin à coulisser dans la portion active du deuxième chemin de came ;
- le dispositif est configuré de sorte que le coulissement du deuxième patin dans la portion active du deuxième chemin de came conduit à une translation de la biellette du deuxième mécanisme de liaison, de sorte à faire pivoter le deuxième volet entre les positions fermée et ouverte ;
- le premier ensemble mobile comprend une pluralité de premiers volets, aptes à pivoter par rapport au cadre entre une position fermée et une position ouverte selon des axes distincts et parallèles ; et le premier mécanisme de liaison comprend un premier élément de transmission articulé à chacun desdits premiers volets, ledit premier élément de transmission étant articulé à la biellette dudit premier mécanisme de liaison ;
- le deuxième ensemble mobile comprend une pluralité de deuxièmes volets, aptes à pivoter par rapport au cadre entre une position fermée et une position ouverte selon des axes distincts et parallèles ; et le deuxième mécanisme de liaison comprend un deuxième élément de transmission articulé à chacun desdits deuxièmes volets, ledit deuxième élément de transmission étant articulé à la biellette dudit deuxième mécanisme de liaison.

L'invention se rapporte en outre à un véhicule automobile comprenant un dispositif de grille active tel que décrit ci-dessus.

L'invention sera mieux comprise à la lecture de la description qui va suivre, donnée uniquement à titre d'exemple non limitatif et faite en se référant aux dessins sur lesquels :
[Fig 1] la figure 1 est une vue en perspective éclatée d'un dispositif de grille active selon un mode de réalisation de l'invention ;

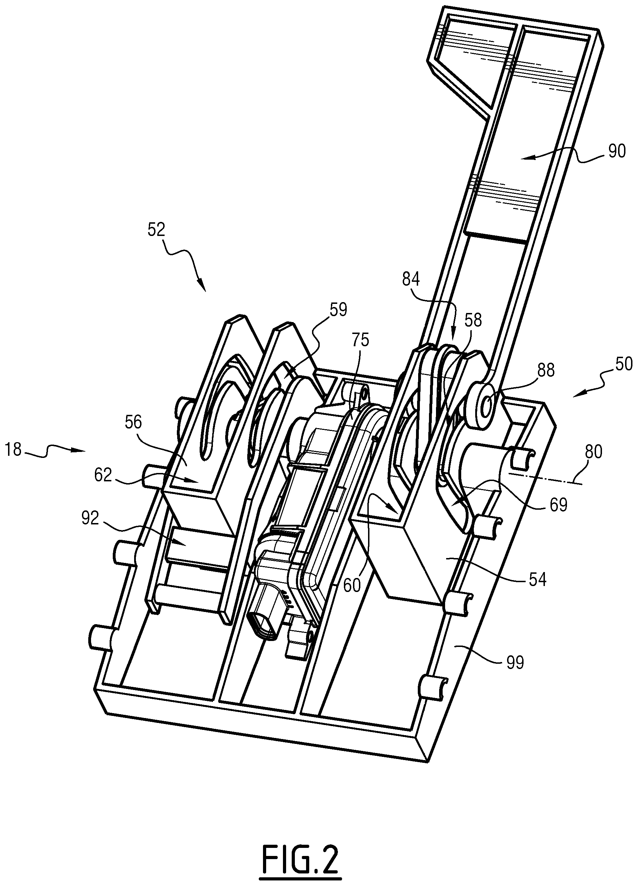

[Fig 2] la figure 2 est une vue de détail du dispositif de la figure 1 ; et
[Fig 3] [Fig 4] [Fig 5] Les figures 3, 4 et 5 sont des vues partielles du dispositif de la figure 1, respectivement dans une première, une deuxième et une troisième configurations.

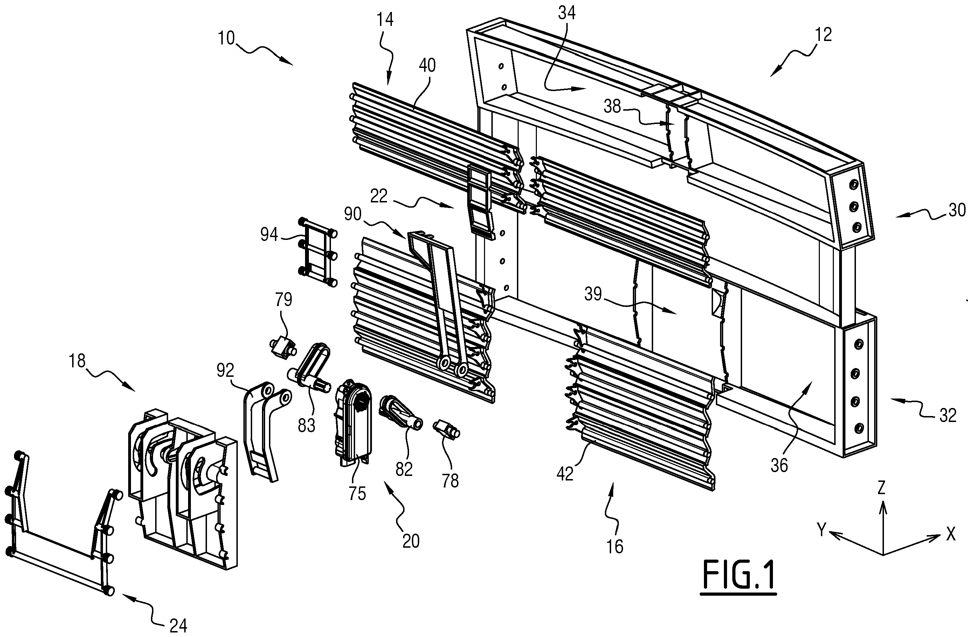

La figure 1 montre en perspective éclatée un dispositif 10 de grille active selon un mode de réalisation de l'invention.

Le dispositif 10 est notamment destiné à être assemblé à une partie avant d'un véhicule automobile (non représenté), afin de réguler une entrée d'air dans un compartiment moteur dudit véhicule.

Le dispositif 10 comprend notamment : un cadre 12 ; un premier 14 et un deuxième 16 ensembles de volets mobiles ; une structure à cames 18 ; un dispositif d'actionnement 20 ; et un premier 22 et un deuxième 24 mécanismes de liaison.

De préférence, le cadre 12 est sensiblement plan et présente un contour sensiblement parallélépipédique. Dans la suite de la description, on considère une base orthonormée (X, Y, Z) associée au cadre 12 dans une configuration assemblée à un véhicule automobile (non représenté). La direction Z représente la verticale et la direction X représente une direction de déplacement du véhicule.

Le cadre 12 est sensiblement disposé dans un plan (Y, Z). Le cadre 12 comporte un premier 30 et un deuxième 32 logements de volets. Les premier 30 et deuxième 32 logements sont sensiblement alignés selon Z, le premier logement 30 se trouvant au-dessus du deuxième logement 32.

Chaque logement 30, 32 comporte au moins une ouverture 34, 36 délimitée par un bord parallélépipédique, de côtés sensiblement disposés selon Y et Z.

Dans le mode de réalisation représenté, chaque logement 30, 32 comporte deux ouvertures 34, 36 sensiblement alignées selon Y. Les ouvertures 34 du premier logement 30 sont sensiblement identiques et sont séparées selon Y par un premier panneau 38. Les ouvertures 36 du deuxième logement 32 sont sensiblement identiques et sont séparées selon Y par un deuxième panneau 39.

Selon une variante non représentée, le premier 30 et/ou le deuxième 32 logement comporte une seule ouverture, ou encore un nombre d'ouvertures supérieur ou égal à trois.

Chacun des premier 14 et deuxième 16 ensembles de volets mobiles est monté en rotation sur le cadre 12, de sorte à ouvrir et à fermer, respectivement le premier 30 et le deuxième 32 logements.

Chacun des premier 14 et deuxième 16 ensembles comprend au moins un volet 40, 42 mobile en rotation par rapport au cadre 12, selon un axe sensiblement parallèle à Y. Comme il sera décrit par la suite, chaque volet 40, 42 est apte à pivoter par rapport au cadre 12 entre une position fermée et une position ouverte.

Dans le mode de réalisation représenté, chacun des premier 14 et deuxième 16 ensembles comporte une pluralité de volets 40, 42.

Préférentiellement, chacune des deux ouvertures 34 du premier logement 30 reçoit plusieurs volets 40 disposés les uns au-dessus des autres, selon des axes de rotation 43, 44 distincts et sensiblement parallèles à Y. De préférence, un même axe 43, 44 est commun à deux volets 40 situés dans chacune des deux ouvertures 34.

Préférentiellement, chacune des deux ouvertures 36 du deuxième logement 32 reçoit plusieurs volets 42 disposés les uns au-dessus des autres, selon des axes de rotation 45, 46 distincts et sensiblement parallèles à Y. De préférence, un même axe 45, 46 est commun à deux volets 42 situés dans chacune des deux ouvertures 36.

Une extrémité selon Y de chaque volet 40 du premier ensemble 14 est notamment articulée au premier panneau 38, séparant les ouvertures 34 du premier logement 30. Une extrémité selon Y de chaque volet 42 du deuxième ensemble 16 est notamment articulée au deuxième panneau 39, séparant les ouvertures 36 du deuxième logement 32.

Un nombre de volets 40, 42 reçus dans une même ouverture 34, 36 est par exemple compris entre deux et six. Dans le mode de réalisation représenté, chaque ouverture 34 du premier logement 30 reçoit trois volets 40 et chaque ouverture 36 du deuxième logement 32 reçoit quatre volets 42.

La structure à cames 18 comprend un premier 50 et un deuxième 52 chemins de came. Chacun desdits premier 50 et deuxième 52 chemins de came comporte au moins une plaque 54, 56, chacune desdites plaques 54, 56 comportant une fente 58, 59 aux extrémités fermées.

Dans le mode de réalisation représenté, chacun des premier 50 et deuxième 52 chemins de came comporte une paire de plaques 54, 56. Chaque plaque 54, 56 comporte une fente 58, 59 aux extrémités fermées. Les fentes 58 des deux plaques 54 du premier chemin de came 50 ont une forme identique. De même, les fentes 59 des deux plaques 56 du deuxième chemin de came 52 ont une forme identique.

Chaque plaque 54, 56 des premier 50 et deuxième 52 chemins de came est fixée au cadre 12. Plus précisément, chaque plaque 54, 56 est disposée dans un plan (X, Z) et forme une saillie selon X par rapport au deuxième panneau 39 du cadre 12.

Dans le mode de réalisation représenté, chaque plaque 54, 56 des premier 50 et deuxième 52 chemins de came est formée d'une pièce avec un support 99, ledit support 99 étant fixé au deuxième panneau 39.

Les deux plaques 54 du premier chemin de came 50 sont écartées selon Y d'un premier espace 60 et disposées de sorte que les fentes 58 desdites plaques 54 soient en vis-à-vis l'une de l'autre. De même, les deux plaques 56 du deuxième chemin de came 52 sont écartées selon Y d'un deuxième espace 62 et disposées de sorte que les fentes 59 desdites plaques 56 soient en vis-à-vis l'une de l'autre.

Chacun des premier 50 et deuxième 52 chemins de came comporte une portion active 64, 65 et une portion inactive 66, 67, continues l'une avec l'autre.

Chacune des portions actives 64, 65 correspond à une partie de la fente 58, 59 ayant sensiblement la forme d'un premier arc de cercle de faible rayon de courbure. Ledit premier arc de cercle forme un angle d'environ 90°. Les extrémités dudit premier arc de cercle sont situées sensiblement l'une au-dessus de l'autre selon Z.

Chacune des portions inactives 66, 67 correspond à une partie de la fente 58, 59 ayant sensiblement la forme d'un second arc de cercle, de rayon de courbure élevé. Par « rayon de courbure élevé », on entend que pour chaque chemin de came 50, 52, le rayon de courbure du second arc de cercle est supérieur au rayon de courbure du premier arc de cercle. Ledit second arc de cercle forme un angle aigu, les extrémités dudit second arc de cercle étant sensiblement alignées selon X.

Dans le premier chemin de came 50, la portion active 64 s'étend vers le haut par rapport à la portion inactive 66. Une première extrémité 68 de chaque fente 58 est adjacente à la portion active 64. Une seconde extrémité 69 de chaque fente 58 est adjacente à la portion inactive 66.

Dans le deuxième chemin de came 52, la portion active 65 s'étend vers le bas par rapport à la portion inactive 67. Une première extrémité 70 de chaque fente 59 est adjacente à la portion inactive 67. Une seconde extrémité 71 de chaque fente 59 est adjacente à la portion active 65.

Le dispositif d'actionnement 20 comporte : un actionneur 75, un levier d'actionnement 76 et un premier 78 et un deuxième 79 patins.

L'actionneur 75 est fixé au deuxième panneau 39 du cadre 12, entre les premier 50 et deuxième 52 chemins de came. Le levier d'actionnement 76 est monté en rotation sur l'actionneur 75, selon un axe 80 parallèle à Y.

Dans le mode de réalisation représenté, l'actionneur 75 est fixé au support 99, ledit support 99 étant fixé au deuxième panneau 39.

Pour chacun des premier 50 et deuxième 52 chemins de came, les concavités de la portion active 64, 65 et de la portion inactive 66, 67 sont orientées vers l'axe 80 de rotation du levier d'actionnement 76.

Le levier d'actionnement 76 comprend un premier 82 et un deuxième 83 tronçons, disposés de part et d'autre de l'actionneur 75 selon Y. Chacun desdits premier 82 et deuxième 83 tronçons comporte respectivement une première 84 et une deuxième 85 glissière. Chaque glissière 84, 85 forme une saillie radiale par rapport à l'axe 80 de rotation du levier 76.

Chaque glissière 84, 85 s'étend selon un axe 86, 87 perpendiculaire à Y. Les axes 86, 87 des première 84 et deuxième 85 glissières forment un angle non nul compris entre 45° et 135°. Préférentiellement, ledit angle est de 90° environ.

Le premier 78 et le deuxième 79 patins sont reçus respectivement dans la première 84 et dans la deuxième 85 glissières. Chaque patin 78, 79 est apte à coulisser dans la glissière 84, 85 correspondante, selon l'axe 86, 87 de ladite glissière.

Chacun des premier 78 et deuxième 79 patins comporte une broche 88, 89. Chaque broche 88, 89 forme une saillie selon Y, de part et d'autre de la glissière 84, 85 correspondant au patin 78, 79.

La première glissière 84 est disposée dans le premier espace 60 entre les plaques 54 du premier chemin de came 50. Chaque extrémité de la broche 88 du premier patin 78 est reçue et apte à se déplacer dans la fente 58 de l'une desdites plaques 54.

La deuxième glissière 85 est disposée dans le deuxième espace 62 entre les plaques 56 du deuxième chemin de came 52. Chaque extrémité de la broche 89 du deuxième patin 79 est reçue et apte à se déplacer dans la fente 59 de l'une desdites plaques 56.

Chacun des premier 22 et deuxième 24 mécanismes de liaison comporte respectivement : une première 90 et une deuxième 92 biellette ; et un premier 94 et un deuxième 96 élément de transmission.

Une première extrémité de chacune des première 90 et deuxième 92 biellettes est articulée, respectivement, sur le premier 78 et sur le deuxième 79 patins, selon un axe parallèle à Y. Dans le mode de réalisation représenté, chacune des première 90 et deuxième 92 biellettes comporte deux pattes 97, 98. Chacune des pattes d'une même biellette est articulée sur la broche 88, 89 du patin correspondant, de part et d'autre de la glissière 84, 85 correspondante et de part et d'autre du chemin de came 50, 52 correspondant.

Une seconde extrémité de chacune des première 90 et deuxième 92 biellettes est articulée, respectivement, sur le premier 94 et sur le deuxième 96 élément de transmission, selon un axe parallèle à Y.

Par ailleurs, le premier élément de transmission 94 est articulé à chaque volet 40 du premier ensemble 14 de volets mobiles, selon des axes parallèles à Y. Un déplacement du premier élément de transmission 94 par rapport au cadre 12 est notamment apte à faire pivoter la totalité des volets 40 du premier ensemble 14 entre une position ouverte et une position fermée.

En outre, le deuxième élément de transmission 96 est articulé à chaque volet 42 du deuxième ensemble 16 de volets mobiles, selon des axes parallèles à Y. Un déplacement du deuxième élément de transmission 96 par rapport au cadre 12 est notamment apte à faire pivoter la totalité des volets 42 du deuxième ensemble 16 entre une position ouverte et une position fermée.

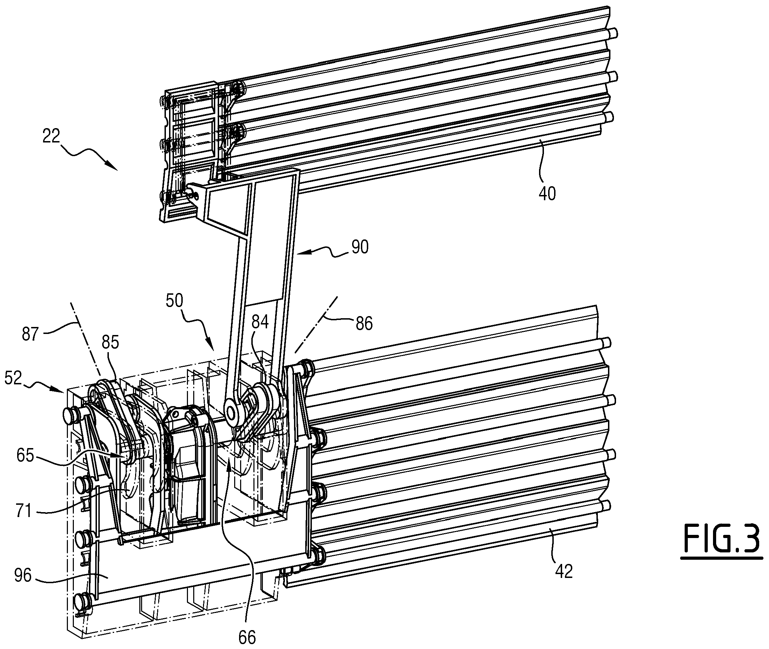

La figure 3 montre le dispositif 10 dans une première configuration décrite ci-après.

Dans la première configuration, la totalité des volets 40 du premier ensemble 14 est dans une position dite fermée, dans laquelle les ouvertures 34 du premier logement 30 sont obturées par lesdits volets 40.

La position fermée des volets 40 du premier ensemble 14 correspond à une position dite haute du premier élément de transmission 94, articulé à chaque volet 40, ainsi qu'à une position dite haute de la première biellette 90, articulée audit premier élément de transmission 94.

De même, dans la première configuration, la totalité des volets 42 du deuxième ensemble 16 est dans une position dite fermée, dans laquelle les ouvertures 36 du deuxième logement 32 sont obturées par lesdits volets 42.

La position fermée des volets 42 du deuxième ensemble 16 correspond à une position dite haute du deuxième élément de transmission 96, articulé à chaque volet 42, ainsi qu'à une position dite haute de la deuxième biellette 92, articulée audit deuxième élément de transmission 96.

Par ailleurs, dans la première configuration, la broche 88 du premier patin 78 du dispositif d'actionnement 20 est au contact de la première extrémité 68 de chaque fente 58 du premier chemin de came 50. En outre, la broche 89 du deuxième patin 79 du dispositif d'actionnement 20 est au contact de la première extrémité 70 de chaque fente 59 du deuxième chemin de came 52.

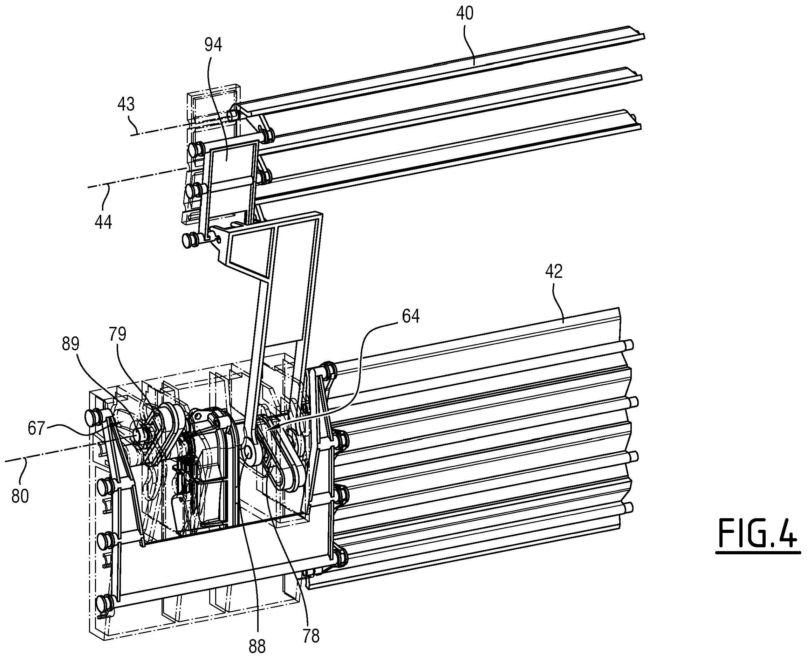

La figure 4 montre le dispositif 10 dans une deuxième configuration décrite ci-après.

Dans la deuxième configuration, la totalité des volets 40 du premier ensemble 14 est dans une position dite ouverte, dans laquelle un espace maximal est laissé pour le passage de l'air à travers les ouvertures 34 du premier logement 30.

La position ouverte des volets 40 du premier ensemble 14 correspond à une position dite basse du premier élément de transmission 94, articulé à chaque volet 40. Dans ladite position basse, le premier élément de transmission 94 est situé plus bas selon Z que dans la position haute décrite précédemment.

De même, la position ouverte des volets 40 du premier ensemble 14 correspond à une position dite basse de la première biellette 90, articulée au premier élément de transmission 94. Dans ladite position basse, la première biellette 90 est située plus bas selon Z que dans la position haute décrite précédemment.

En revanche, dans la deuxième configuration, la totalité des volets 42 du deuxième ensemble 16 est dans la position fermée décrite précédemment. Le deuxième élément de transmission 96 et la deuxième biellette 92 sont dans la position haute décrite précédemment.

Par ailleurs, dans la deuxième configuration, la broche 88 du premier patin 78 est disposée à une jonction entre les portions active 64 et inactive 66 du premier chemin de came 50. En outre, la broche 89 du deuxième patin 79 est disposée à une jonction entre les portions inactive 67 et active 65 du deuxième chemin de came 52.

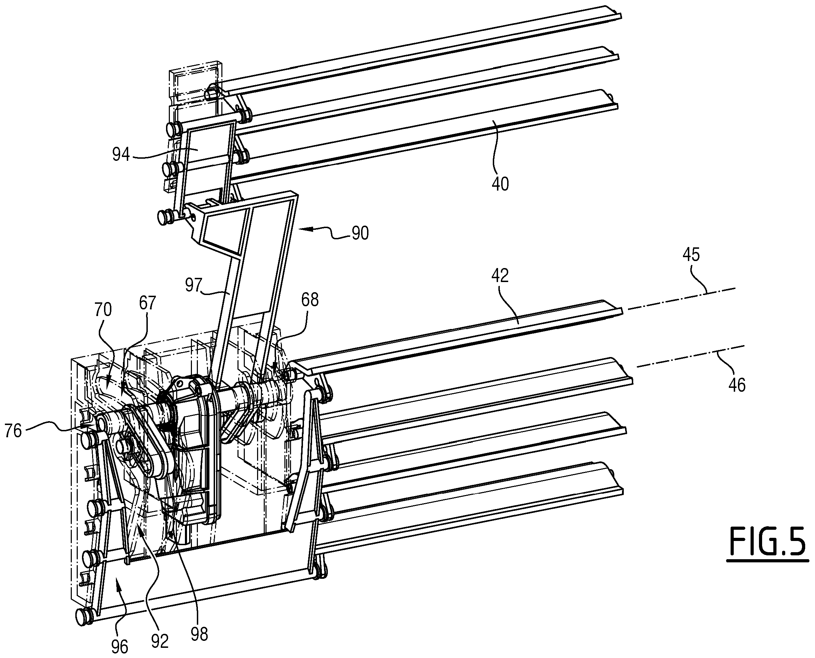

La figure 5 montre le dispositif 10 dans une troisième configuration décrite ci-après.

Dans la troisième configuration, la totalité des volets 40 du premier ensemble 14 est dans la position ouverte décrite précédemment. La première biellette 90 et le premier élément de transmission 94 sont dans la position basse décrite précédemment.

En outre, dans la troisième configuration, la totalité des volets 42 du deuxième ensemble 16 est dans une position dite ouverte, dans laquelle un espace maximal est laissé pour le passage de l'air à travers les ouvertures 36 du deuxième logement 32.

La position ouverte des volets 42 du deuxième ensemble 16 correspond à une position dite basse du deuxième élément de transmission 96, articulé à chaque volet 42. Dans ladite position basse, le deuxième élément de transmission 96 est situé plus bas selon Z que dans la position haute décrite précédemment.

De même, la position ouverte des volets 42 du deuxième ensemble 16 correspond à une position dite basse de la deuxième biellette 92, articulée au deuxième élément de transmission 96. Dans ladite position basse, la deuxième biellette 92 est située plus bas selon Z que dans la position haute décrite précédemment.

Par ailleurs, dans la troisième configuration, la broche 88 du premier patin 78 est au contact de la seconde extrémité 69 de chaque fente 58 du premier chemin de came 50. En outre, la broche 89 du deuxième patin 79 est au contact de la seconde extrémité 71 de chaque fente 59 du deuxième chemin de came 52.

Un procédé de fonctionnement du dispositif 10 va à présent être décrit. Un tel procédé est par exemple mis en œuvre au moyen d'un programme mémorisé dans un module électronique de commande (non représenté) d'un véhicule automobile (non représenté) comprenant le dispositif 10.

Un tel programme associe par exemple chacune des première, deuxième et troisième configurations du dispositif 10 décrites ci-dessus à un besoin spécifique de refroidissement d'un compartiment moteur du véhicule. Un tel besoin spécifique de refroidissement est par exemple déterminé par comparaison d'une température du compartiment moteur avec un seuil prédéfini dans le programme. Le refroidissement peut concerner la motorisation du véhicule, les batteries ou d'autres accessoires.

On considère que le dispositif 10 est initialement dans la première configuration décrite ci-dessus. Les volets 40, 42 étant en position fermée, une circulation d'air à travers les ouvertures 34, 36 est à un niveau minimal lors du déplacement du véhicule comprenant le dispositif 10.

Ainsi, dans la première configuration, le flux d'air autour du véhicule est dévié, ce qui permet un gain aérodynamique et une diminution associée d'émissions de CO₂.

En outre, la première configuration permet une rapide montée en température du moteur du véhicule, de sorte à atteindre rapidement sa température de fonctionnement optimal.

Dans le cas où le programme détermine un besoin de refroidissement du compartiment moteur, l'actionneur 75 fait pivoter le levier d'actionnement 76 autour de l'axe de rotation 80. Entraînées respectivement par la première 84 et par la deuxième 85 glissières, les broches 88, 89 des premier 78 et deuxième 79 patins se déplacent dans les fentes 58, 59, respectivement du premier 50 et du deuxième 52 chemins de came.

Plus précisément, à partir de la première extrémité 68 des fentes 58, la broche 88 du premier patin 78 se déplace dans la portion active 64 du premier chemin de came 50. La première biellette 90, articulée sur la broche 88, se déplace ainsi de la position haute vers la position basse. De même, le premier élément de transmission 94, articulé à la première biellette 90, se déplace de la position haute vers la position basse. Ce déplacement conduit au pivotement des volets 40 du premier ensemble 14 de la position fermée vers la position ouverte.

Par ailleurs, à partir de la première extrémité 70 des fentes 59, la broche 89 du deuxième patin 79 se déplace dans la portion inactive 67 du deuxième chemin de came 52. Ladite portion inactive 67 est configurée de sorte que la deuxième biellette 92, articulée sur la broche 89, pivote autour de son articulation au deuxième élément de transmission 96 sans déplacer ledit deuxième élément de transmission. Les volets 42 du deuxième ensemble 16 restent donc en position fermée.

La deuxième configuration est atteinte lorsque chaque broche 88, 89 atteint la jonction entre les portions actives 64, 65 et inactives 66, 67 du chemin de came 50, 52 correspondant. Les volets 40 du premier ensemble 14 sont alors en position ouverte.

En raison de l'ouverture uniquement du premier ensemble 14 de volets, la deuxième configuration du dispositif 10 permet un niveau intermédiaire de circulation d'air à travers les ouvertures 34, 36 dudit dispositif 10.

En cas de diminution des besoins de refroidissement, déterminée par le programme, l'actionneur 75 fait pivoter en sens inverse le levier d'actionnement 76 pour repasser le dispositif 10 en première configuration.

A l'inverse, dans le cas où le programme détermine qu'un niveau intermédiaire de ventilation est insuffisant pour refroidir le compartiment moteur, l'actionneur 75 poursuit le pivotement du levier d'actionnement 76 autour de l'axe de rotation 80, dans le sens initial. Ce pivotement entraîne la poursuite du déplacement des broches 88, 89 des premier 78 et deuxième 79 patins dans les fentes 58, 59 des premier 50 et deuxième 52 chemins de came.

Plus précisément, à partir de la deuxième configuration, la broche 88 du premier patin 78 se déplace dans la portion inactive 66 du premier chemin de came 50. Ladite portion inactive 66 est configurée de sorte que la première biellette 90, articulée sur la broche 88, pivote autour de son articulation au premier élément de transmission 94 sans déplacer ledit premier élément de transmission. Les volets 40 du premier ensemble 14 restent donc en position ouverte.

Par ailleurs, à partir de la deuxième configuration, la broche 89 du deuxième patin 79 se déplace dans la portion active 65 du deuxième chemin de came 52. La deuxième biellette 92, articulée sur la broche 89, se déplace ainsi de la position haute vers la position basse. De même, le deuxième élément de transmission 96, articulé à la deuxième biellette 92, se déplace de la position haute vers la position basse. Ce déplacement conduit au pivotement des volets 42 du deuxième ensemble 16 de la position fermée vers la position ouverte.

La troisième configuration est atteinte lorsque chaque broche 88, 89 atteint la seconde extrémité 69, 71 de chaque fente 58, 59 du chemin de came 50, 52 correspondant. Les volets 40 du premier ensemble 14 et les volets 42 du deuxième ensemble 16 sont alors en position ouverte.

En raison de l'ouverture des deux ensembles 14, 16 de volets, la troisième configuration du dispositif 10 permet un niveau maximal de circulation d'air à travers les ouvertures 34, 36 dudit dispositif 10, pour un refroidissement maximal du compartiment moteur du véhicule.

En cas de diminution des besoins de refroidissement, déterminée par le programme, l'actionneur 75 fait pivoter en sens inverse le levier d'actionnement 76. Par un déplacement inverse des broches 88, 89 dans les fentes 58, 59, le dispositif 10 passe ainsi de la troisième à la deuxième configuration, puis éventuellement de la deuxième à la première configuration.

Le dispositif 10 à grille active permet ainsi une ouverture séquentielle des volets 40, 42, associée au besoin de refroidissement.

Le dispositif 10 permet donc de moduler simplement et efficacement la circulation d'air à l'intérieur d'un véhicule automobile, au cours du déplacement de ce dernier.

## Revendications

1. Dispositif (10) de grille active, comprenant :
- un cadre (12) ;
- un premier ensemble (14) mobile, comprenant au moins un premier volet (40) apte à pivoter par rapport au cadre entre une position fermée et une position ouverte ;
- un deuxième ensemble (16) mobile, comprenant au moins un deuxième volet (42) apte à pivoter par rapport au cadre entre une position fermée et une position ouverte ;
- un premier (50) et un deuxième (52) chemins de came ; et
- un premier (22) et un deuxième (24) mécanismes de liaison reliant les premier et deuxième ensembles mobiles, respectivement au premier et au deuxième chemins de came, chacun des premier et deuxième mécanismes de liaison comprenant au moins une biellette (90, 92) ;
le dispositif étant tel que :
- les premier et deuxième chemins de came sont fixes par rapport au cadre ; et
- le dispositif comprend en outre :
- un levier d'actionnement (76) rotatif par rapport au cadre ; et
- un premier (78) et un deuxième (79) patins, mobiles en translation par rapport au levier d'actionnement, lesdits premier et deuxième patins étant aptes à coulisser respectivement dans le premier (50) et dans le deuxième (52) chemins de came ;
la biellette (90, 92) de chacun des premier et deuxième mécanismes de liaison étant articulée respectivement sur le premier (78) et sur le deuxième (79) patins ; et
- le levier d'actionnement est apte à pivoter par rapport au cadre entre une première, une deuxième et une troisième configurations, telles que :
- dans la première configuration, chacun des premier (40) et deuxième (42) volets est en position fermée ;
- dans la deuxième configuration, le premier volet est en position ouverte et le deuxième volet est en position fermée ; et
- dans la troisième configuration, chacun des premier et deuxième volets est en position ouverte.

2. Dispositif selon la revendication 1, comprenant en outre un actionneur (75) relié au levier d'actionnement (76), ledit actionneur étant apte à faire pivoter ledit levier par rapport au cadre entre les première, deuxième et troisième configurations.

3. Dispositif selon la revendication 1 ou la revendication 2, dans lequel le premier chemin de came (50) comporte une portion active (64) et une portion inactive (66), configurées de sorte que :
- le pivotement du levier d'actionnement (76) entre la première et la deuxième configurations conduit le premier patin (78) à coulisser dans la portion active (64) du premier chemin de came ; et
- le pivotement du levier d'actionnement entre la deuxième et la troisième configurations conduit le premier patin à coulisser dans la portion inactive (66) du premier chemin de came.

4. Dispositif selon la revendication 3, configuré de sorte que le coulissement du premier patin (78) dans la portion active (64) du premier chemin de came conduit à une translation de la biellette (90) du premier mécanisme de liaison (22), de sorte à faire pivoter le premier volet (40) entre les positions fermée et ouverte.

5. Dispositif selon l'une des revendications précédentes, dans lequel le deuxième chemin de came (52) comporte une portion inactive (67) et une portion active (65), configurées de sorte que :
- le pivotement du levier d'actionnement (76) entre la première et la deuxième configurations conduit le deuxième patin (79) à coulisser dans la portion inactive (67) du deuxième chemin de came ; et
- le pivotement du levier d'actionnement entre la deuxième et la troisième configurations conduit le deuxième patin à coulisser dans la portion active (65) du deuxième chemin de came.

6. Dispositif selon la revendication 5, configuré de sorte que le coulissement du deuxième patin (79) dans la portion active (65) du deuxième chemin de came conduit à une translation de la biellette (92) du deuxième mécanisme de liaison (24), de sorte à faire pivoter le deuxième volet (42) entre les positions fermée et ouverte.

7. Dispositif selon l'une des revendications précédentes, dans lequel :
- le premier ensemble (14) mobile comprend une pluralité de premiers volets (40), aptes à pivoter par rapport au cadre entre une position fermée et une position ouverte selon des axes (43, 44) distincts et parallèles ; et
- le premier mécanisme de liaison (22) comprend un premier élément de transmission (94) articulé à chacun desdits premiers volets, ledit premier élément de transmission étant articulé à la biellette (90) dudit premier mécanisme de liaison.

8. Dispositif selon l'une des revendications précédentes, dans lequel :
- le deuxième ensemble (16) mobile comprend une pluralité de deuxièmes volets (44), aptes à pivoter par rapport au cadre entre une position fermée et une position ouverte selon des axes (45, 46) distincts et parallèles ; et
- le deuxième mécanisme de liaison (24) comprend un deuxième élément de transmission (96) articulé à chacun desdits deuxièmes volets, ledit deuxième élément de transmission étant articulé à la biellette (92) dudit deuxième mécanisme de liaison.

9. Véhicule automobile comprenant un dispositif (10) de grille active selon l'une des revendications précédentes.

## Patentansprüche

1. Aktive Gittervorrichtung (10), umfassend:
- einen Rahmen (12);
- eine erste bewegliche Anordnung (14), umfassend mindestens eine erste Klappe (40), die geeignet ist, um in Bezug auf den Rahmen zwischen einer geschlossenen Position und einer offenen Position zu schwenken;
- eine zweite bewegliche Anordnung (16), umfassend mindestens eine zweite Klappe (42), die geeignet ist, um in Bezug auf den Rahmen zwischen einer geschlossenen Position und einer offenen Position zu schwenken;
- einen ersten (50) und einen zweiten (52) Nockenpfad; und
- einen ersten (22) und einen zweiten (24) Verbindungsmechanismus, die die erste und die zweite bewegliche Anordnung jeweils mit der ersten und der zweiten Nockenbahn verbinden, wobei jeder von dem ersten und dem zweiten Verbindungsmechanismen mindestens ein Gestänge (90, 92) umfasst;
wobei die Vorrichtung derart ist, dass:
- die erste und die zweite Nockenbahn in Bezug auf den Rahmen feststehend sind; und
- die Vorrichtung ferner Folgendes umfasst:
- einen Betätigungshebel (76), der in Bezug auf den Rahmen drehbar ist; und
- einen ersten (78) und einen zweiten (79) Gleitschuh, die in Bezug auf den Betätigungshebel verschiebbar beweglich sind, wobei der erste und der zweite Gleitschuh geeignet sind, um jeweils in der ersten (50) und in der zweiten (52) Nockenbahn zu gleiten;
wobei die Verbindungsstange (90, 92) von jedem von dem ersten und dem zweiten Verbindungsmechanismus jeweils an dem ersten (78) und dem zweiten (79) Gleitschuh angelenkt ist; und
- der Betätigungshebel geeignet ist, um in Bezug auf den Rahmen zwischen einer ersten, einer zweiten und einer dritten Konfiguration zu schwenken, wobei gilt:
- in der ersten Konfiguration ist jede von der ersten (40) und der zweiten (42) Klappe in der geschlossenen Position;
- in der zweiten Konfiguration ist die erste Klappe in der offenen Position und die zweite Klappe in der geschlossenen Position; und
- in der dritten Konfiguration ist jede von der ersten und der zweiten Klappe in der offenen Position.

2. Vorrichtung nach Anspruch 1, ferner umfassend einen Aktuator (75), der mit dem Betätigungshebel (76) verbunden ist, wobei der Aktuator geeignet ist, um den Hebel in Bezug auf den Rahmen zwischen der ersten, zweiten und dritten Konfiguration zu schwenken.

3. Vorrichtung nach Anspruch 1 oder Anspruch 2, wobei die erste Nockenbahn (50) einen aktiven Abschnitt (64) und einen inaktiven Abschnitt (66) umfasst, die konfiguriert sind, sodass:
- das Schwenken des Betätigungshebels (76) zwischen der ersten und der zweiten Konfiguration dazu führt, dass der erste Gleitschuh (78) in dem aktiven Abschnitt (64) der ersten Nockenbahn gleitet; und
- das Schwenken des Betätigungshebels zwischen der zweiten und der dritten Konfiguration dazu führt, dass der erste Gleitschuh in dem inaktiven Abschnitt (66) der ersten Nockenbahn gleitet.

4. Vorrichtung nach Anspruch 3, die konfiguriert ist, sodass das Gleiten des ersten Gleitschuhs (78) in dem aktiven Abschnitt (64) der ersten Nockenbahn zu einer Verschiebung des Gestänges (90) des ersten Verbindungsmechanismus (22) führt, um die erste Klappe (40) zwischen der geschlossenen und der offenen Position zu schwenken.

5. Vorrichtung nach einem der vorherigen Ansprüche, wobei die zweite Nockenbahn (52) einen inaktiven Abschnitt (67) und einen aktiven Abschnitt (65) umfasst, die konfiguriert sind, sodass:
- das Schwenken des Betätigungshebels (76) zwischen der ersten und der zweiten Konfiguration dazu führt, dass der zweite Gleitschuh (79) in dem inaktiven Abschnitt (67) der zweiten Nockenbahn gleitet; und
- das Schwenken des Betätigungshebels zwischen der zweiten und der dritten Konfiguration dazu führt, dass der zweite Gleitschuh in dem aktiven Abschnitt (65) der zweiten Nockenbahn gleitet.

6. Vorrichtung nach Anspruch 5, die konfiguriert ist, sodass das Gleiten des zweiten Gleitschuhs (79) in dem aktiven Abschnitt (65) der zweiten Nockenbahn zu einer Verschiebung des Gestänges (92) des zweiten Verbindungsmechanismus (24) führt, sodass die zweite Klappe (42) zwischen der geschlossenen und der offenen Position geschwenkt wird.

7. Vorrichtung nach einem der vorherigen Ansprüche, wobei:
- die erste bewegliche Anordnung (14) eine Vielzahl von ersten Klappen (40) umfasst, die geeignet sind, um in Bezug auf den Rahmen zwischen einer geschlossenen Position und einer offenen Position entlang verschiedener und paralleler Achsen (43, 44) zu schwenken; und
- der erste Verbindungsmechanismus (22) ein erstes Übertragungselement (94) umfasst, das an jede der ersten Klappen angelenkt ist, wobei das erste Übertragungselement an die Verbindungsstange (90) des ersten Verbindungsmechanismus angelenkt ist.

8. Vorrichtung nach einem der vorherigen Ansprüche, wobei:
- die zweite bewegliche Anordnung (16) eine Vielzahl von zweiten Klappen (44) umfasst, die geeignet sind, um in Bezug auf den Rahmen zwischen einer geschlossenen Position und einer offenen Position entlang verschiedener und paralleler Achsen (45, 46) zu schwenken; und
- der zweite Verbindungsmechanismus (24) ein zweites Übertragungselement (96) umfasst, das an jede der zweiten Klappen angelenkt ist, wobei das zweite Übertragungselement an die Verbindungsstange (92) des zweiten Verbindungsmechanismus angelenkt ist.

9. Kraftfahrzeug, umfassend eine aktive Gittervorrichtung (10) nach einem der vorherigen Ansprüche.

## Claims

1. An active grid device (10), comprising :
- a frame (12) ;
- a first mobile assembly (14), comprising at least a first flap (40) capable of pivoting with respect to the frame between a closed position and an open position;
- a second mobile assembly (16) comprising at least one second flap (42) capable of pivoting with respect to the frame between a closed position and an open position;
- first (50) and second (52) cam tracks; and
- a first (22) and a second (24) coupling mechanism connecting the first and second mobile assemblies, respectively to the first and second cam track, each of the first and second coupling mechanisms comprising at least one connecting rod (90, 92);
wherein :
- the first and second cam tracks are fixed relative to the frame; and
- the device also includes :
- an operating lever (76) rotatable relative to the frame; and
- a first (78) and a second (79) shoe, mobile in translation with respect to the actuating lever, said first and second shoes being able to slide respectively in the first (50) and second (52) cam tracks;
the connecting rod (90, 92) of each of the first and second coupling mechanisms being articulated respectively on the first (78) and second (79) shoes; and the first (78) and second (79) shoes being articulated respectively on the first (50) and second (52) cam tracks.
- the operating lever can be rotated in relation to the frame between a first, second and third configuration, such as :
- in the first configuration, each of the first (40) and second (42) flaps is in the closed position ;
- in the second configuration, the first flap is in the open position and the second flap is in the closed position; and
- in the third configuration, each of the first and second flaps is in the open position.

2. The device according to claim 1, further comprising an actuator (75) connected to the actuating lever (76), said actuator being capable of pivoting said lever relative to the frame between the first, second and third configurations.

3. The device according to claim 1 or claim 2, wherein the first cam track (50) comprises an active portion (64) and an inactive portion (66), configured such that :
- pivoting of the actuating lever (76) between the first and second configurations causes the first shoe (78) to slide in the active portion (64) of the first cam track; and
- pivoting the operating lever between the second and third configurations causes the first shoe to slide into the inactive portion (66) of the first cam track.

4. The device according to claim 3, configured so that the sliding of the first shoe (78) in the active portion (64) of the first cam track leads to a translation of the connecting rod (90) of the first coupling mechanism (22), so as to cause the first flap (40) to pivot between the closed and open positions.

5. The device according to anyone of the preceding claims, in which the second cam track (52) comprises an inactive portion (67) and an active portion (65), configured so that :
- pivoting of the actuating lever (76) between the first and second configurations causes the second shoe (79) to slide in the inactive portion (67) of the second cam track; and
- pivoting the operating lever between the second and third configurations causes the second shoe to slide into the active portion (65) of the second cam track.

6. A device according to claim 5, configured so that sliding of the second shoe (79) in the active portion (65) of the second cam track leads to a translation of the connecting rod (92) of the second coupling mechanism (24), so as to cause the second flap (42) to pivot between the closed and open positions.

7. A device according to anyone of the preceding claims, in which:
- the first movable assembly (14) comprises a plurality of first flaps (40), capable of pivoting with respect to the frame between a closed position and an open position according to distinct and parallel axes (43, 44); and
- the first coupling mechanism (22) comprises a first transmission element (94) articulated to each of said first flaps, said first transmission element being articulated to the connecting rod (90) of said first coupling mechanism.

8. A device according to anyone of the preceding claims, in which:
- the second movable assembly (16) comprises a plurality of second flaps (44), capable of pivoting with respect to the frame between a closed position and an open position along distinct and parallel axes (45, 46); and
- the second coupling mechanism (24) comprises a second transmission element (96) articulated to each of said second flaps, said second transmission element being articulated to the connecting rod (92) of said second coupling mechanism.

9. Motor vehicle comprising an active grid device (10) according to any one of the preceding claims.
